# EUROPEAN PATENT SPECIFICATION

(11) **EP 0 674 825 B1**
(45) Date of publication and mention of the grant of the patent: **02.04.1997**
(21) Application number: 94900154.9
(22) Date of filing: 16.11.1993
(51) Int. Cl.: H04Q 11/04

(54) **DEVICE FOR THE CONVERSION OF DATA BLOCKS, FRAME STRUCTURED, INTO ATM CELLS AND VICE VERSA**
VORRICHTUNG ZUR UMSETZUNG VON RAHMENSTRUKTURIERTEN DATENBLÖCKEN IN ATM-ZELLEN UND UMGEKEHRT
DISPOSITIF POUR LA CONVERSION DE BLOCS DE DONNEES, STRUCTURES EN TRAME, EN CELLULES ATM ET VICE-VERSA

(30) Priority: 18.12.1992 IT MI922880
(43) Date of publication of application: 04.10.1995
(73) Proprietor: ITALTEL SOCIETA ITALIANA TELECOMUNICAZIONI s.p.a., 20149 Milano (IT)
(72) Inventor: MERLI, Edoardo, I-43100 Parma (IT); PAVESI, Marco, I-27029 Vigevano (IT)
(74) Representative: Giustini, Delio
(86) International application number: EP9303210
(87) International publication number: WO9415438

(56) References cited:
- WO-A-92/22034
- US-A- 5 136 584
- PATENT ABSTRACTS OF JAPAN vol. 15, no. 488 (E-1277)9 October 1992 & JP,A,04 179 336 (OKI ELECTRIC IND CO LTD) 26 June 1992

## Description

### Technical Field

The present invention relates to a Broadband Integrated Service Digital Network or B-ISDN of the ATM type (Asynchronous Transfer Mode) and finds its application in the access parts of the networks (terminals, data concentrators, adaptors, Interworking Units), as well as in switching nodes (servers, signal processors), and in particular it finds application in data transfer through said broadband networks.

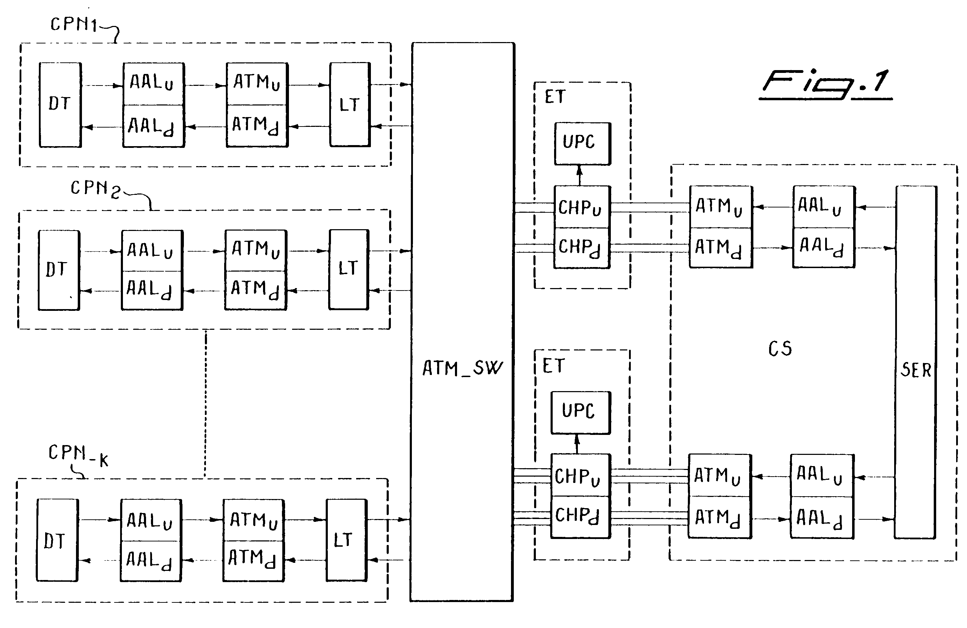

Figure 1 shows schematically a switching network ATM-SW to which Customer Premises Networks CPN1,...,CPNk and a connectionless server CS are linked.

The data generated by any subscriber connected to the B-ISDN network (for example word processors or spreadsheets) is structured in frames or packets of a length varying from a few bytes to dozens of thousands of bytes. In order to be able to transmit such packets on ATM networks it is necessary to adapt the packet format to the format of the ATM cell consisting in 48 information bytes or payloads and in 5 headers bytes for a total of 53 bytes.

The packets are then divided in segments to be included in the ATM cell payloads. In order to be able to carry out the typical verifications of the transmission networks (errors, sequence, etc.) some of the 48 available bytes are occupied by additional information while the remaining bytes will be occupied by message segments. Obviously the subscriber receiving the cells must perform the dual operation (reassembling) in order to be able to get the message again from the ATM payload.

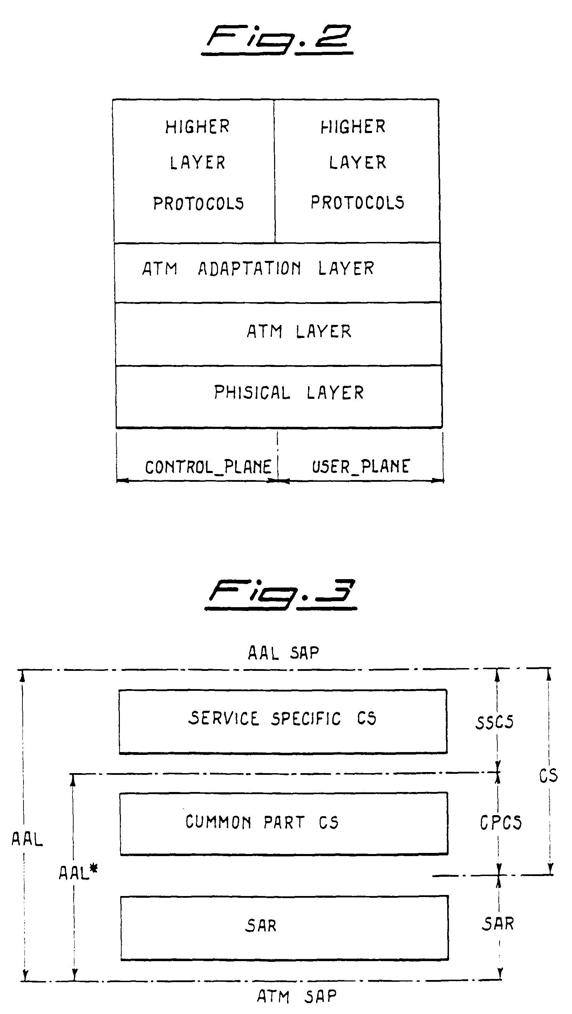

The conversion of the above mentioned frames in ATM cells to be forwarded in the line is carried out through a regular succession or stack of protocols schematically illustrated in figure 2 where the rectangles represent schematically the complex of the operations carried out on the data by the different protocol layers. The information transmission involves the execution of the protocols of different hierarchical layers from top to bottom, and the reception from bottom to top.

The invention regards in particular the so called adaptation layer AAL (ATM Adaptation Layer) of the 3/4 class, that is the one foreseen for data transmission services for which transmitters and receivers do not need strict time restraints (for example constant transmission delay or inferior to a value limit).

On the other hand in the case of services using the broadband network and requiring said restraints (such as video and telephony) AALs of the class 1 and 2 are used. In figure 1 the functions of the ATM and AAL layers are put into evidence together with their locations in the different CPN blocks by countermarking by u and d the units connected on the up-stream and down-stream side, respectively. Moreover for completeness reasons it is necessary to point out that the Exchange Termination ET linked between the server CS and the switching network ATM-SW includes Cell Header Processors CHP and units User Parameter Control UPC suitable for the control of the traffic parameters linked to the different connections. The server CS includes on the other hand said ATM and AAL units as well as the protocols associated to the service (here supposed to be of the connectionless type) indicated in the figure by means of the SER block.

As shown in the alleged figure 3 the protocol layer AAL of the class 3/4 is subdivided in two sublayers, and more precisely: the Convergence Sublayer (CS) and the Segmentation And Reassembly (SAR). The CS sublayer is subdivided in SSCS (Specific Service Convergence Sublayer) and CPCS (Common Part Convergence Sublayer). Hereafter the operations carried out by the protocol sublayers making up the AAL layer in the transmission phase will be briefly described. The operations carried out during the reception phase are of the dual type and are not shown in details.

The sublayer SSCS depends on the service and carries out different operations according to the structure it communicates with; the CPCS receives information blocks of a length within 1 byte to 64 kbytes and adds control informations to the header and the trailer of the received information block (SSCS-PDU). The structure set up in this way (CPCS-PDU) is then segmented in portions of 44 bytes by the SAR sublayer adding moreover two bytes to the header and two bytes to the trailer as control information. This structure of 48 bytes (SAR-PDU) will then pass on to the ATM layer including it as a payload in the ATM cell.

### Background of the Invention

WO 92/22034 discloses an interface between a sunshine ATM switch and a single IBM RS/6000 work station able to convert the incoming frame structured data block into ATM layer, i.e. from the higher layer protocol into ATM cells. A single interface can be connected to the ATM layer.

The interface is structured in a plurality of printed circuits boards and the protocol and adaptation sub layers AAL 3/4 are handled in the work station (and not in the interface) which implies a degradation of work station's performances.

Moreover, since the work station handles data blocks message structured, the construction and the integrity of the messages are performed in the work station.

The number of VCI handled by the interface is limited to 256 as shown in Fig. 3B.

US-A-5 136 584 discloses a link interface to a high speed network (ATM B-ISWD) defining an architecture able to operate in the range from hundred of Megabits and Gigabits, which can be implemented in hardware and able to convert again the incoming frame structured data block into ATM cells.

This interface is designed as to implement a point to point connection between a CPN to an ATM link; no bus structure between AAL and ATM layers is possible allowing multiplexing of different AAL devices (even belonging to different classes) at the user of the ATM layer itself. Therefore such known device can't be used in complex apparatuses like Service Multiplexer systems to multiplex different services with different adaptation layers.

Moreover the structure of the US patent is not suitable for transmitting data through a public telecommunication network which requires the control of the declared user's parameters such as peak cell rate, sustainable cell rate, etc., since the data are directly transmitted as a burst (at the network maximum speed) once they are ready.

According to a known solution the implementation of the above mentioned conversion operations are performed by means of a programmed computer, but this solution involves drastic limitations to the performance of the protocol itself in terms of speed and multiplexing capacity of several subscribers.

In fact a software implementation would be able to serve only applications at a low bit rate, allowing the multiplexing of a very small number of subscribers since the sum of the bit rate of the different connections must anyhow be less than the value limit supported by the implementation itself.

### Obiects of the Invention

The object of the present invention is to overcome the above described inconveniences and limitations by realizing an intermediate conversion between AAL protocol layer and ATM layer, i.e. by realizing the protocol functions AAL 3/4 Common Part (SAR + CPCS) by means of physical devices (hardware) ASIC (Application Specific Integrated Circuit) VLSI (Very Large Scale of Intregration). In particular this object is realized by means of devices guaranteing a good cost/service relation, and which at the same time could be used indifferently in access point (Customer Premises Equipment), multiplexers and servers present in the switching nodes (signal or service servers) in a so called connectionless environment as well as in connection oriented environment.

Such devices make it possible to multiples at the AAL layer several subscribers or several connections (in other words to share by several subscribers -connection- the protocol functions AAL 3/4 Common Part) up to a limit of 150 Mbit/s (sum of the bit 'rates of the different connections).

### Summary of the Invention

The invention accomplishes the above objects by means of a device for converting frame structured data blocks belonging to a plurality of users connected to a B-ISDN network of the ATM type into a flow of data arranged in segments of a given length and corresponding to the protocol layer AAL of the 3/4 class, with said data segments being adapted to be converted into ATM cells and vice-versa, as claimed in claim 1.

Further advantageous characteristics are object of the appended claims.

### Brief Description of the Drawings

The structural and functional characteristics and the advantages in terms of performance of the device according to the present invention will be better understood from the illustrative and not limiting description given hereafter, together with the attached drawings, wherein:
figure 1, already described, shows schematically an ATM switching node;
figure 2, already described, shows the protocol reference model;
figure 3, already described, shows the subdivision of the AAL protocol layer of the class 3/4 (the block countermarked by AAL* indicates the Common Part of an AAL 3/4);
figure 4 shows the structure of the device AAL* according to the invention, foreseen for the control of the protocol layer AAL* (see figure 3);
figures 5 to 8 show in a more detailed way some parts of the device of figure 4; and
figure 9 shows in a more detailed way the structure of the buffer management MMU.

### Detailed Description of the Preferred Embodiment

In the following description it is supposed that the protocol layer SSCS (not being part of the present invention) is realized by software, and that there will be a different SSCS for each type of service: that means that it includes a multiplicity of SSCSs insisting above the CPCS.

The different SSCSs can be realized on several separate processors, and therefore on the AAL* device several processors may insist.

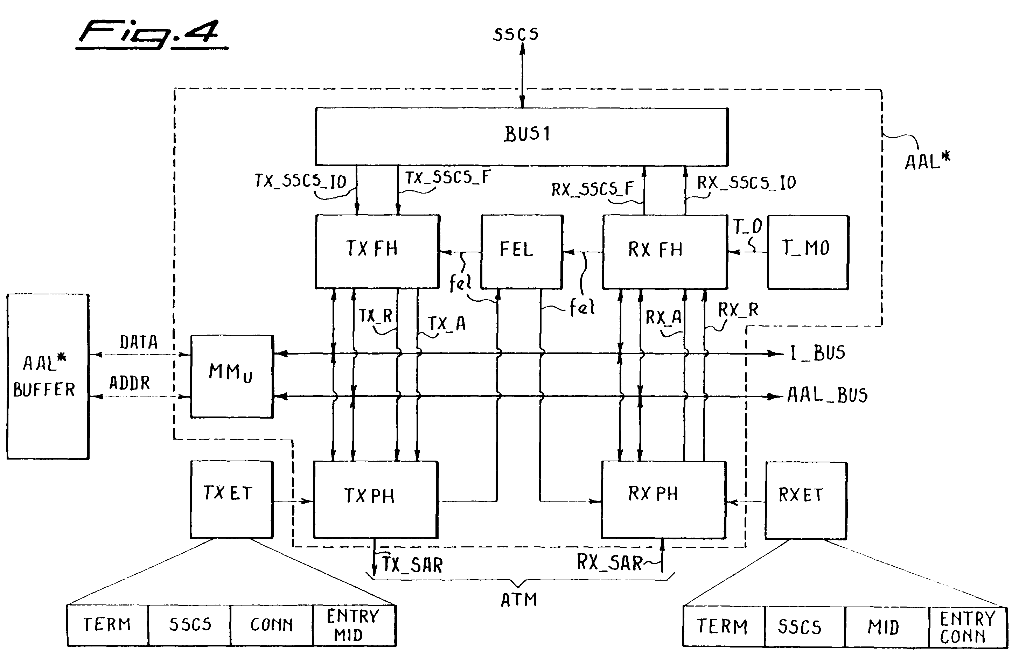

The device according to the invention is realized through an integrated circuit, and in the scheme of figure 4 outside the panel countermarked by AAL* there are parts reported (typical buffer blocks which could not be advantageously integrated in an integrated circuit ASIC), which even belonging functionally to the AAL* block, are physically set up by separate elements.

Referring to the block scheme in figure 4 the functional units set before the control of the protocol sublayers setting up the AAL 3/4 Common Part are marked by AAL*. Said device AAL* according to the invention includes a bus structure BUS1 - preferentially set up by a VME bus - for the connection with the superior layers (SSCS). This shared structure must allow the data transfer in the two directions. The interface of the device AAL* towards the bus is - according to a preferred embodiment of the invention - consistent with the microprocessor interface Motorola of the 68000 family. The connection with the bus (VME) is realized through arbitration devices of the commercial type.

The bus BUS1 is common for both data stream directions and works at double speed with respect to that of the ATM link (that is 310 Mbit/s). It is shared in reception and in transmission through a management (not illustrated) privileging the procedures on the reception side.

To the bus BUS1 a frame handler transmission means TXFH (TX frame handler) are connected, which in its turn are connected to a protocol handler transmission means TXPH (TX_AAL_Protocol Handler) and to a couple of bus hereafter called I_BUS (Internal Bus) and AAL_BUS (AAL Data Bus). To these bus a memory management unit MMU is connected, which, in its turn, is connected through a data bus DATA and an address bus ADDR to a buffer AAL*_BUFFER. In the reception part the presence of protocol handler reception means RXPH (RX_AAL_Protocol Handler) are foreseen, which, in its turn, are connected to said pair of bus I_BUS and AAL_BUS and to frame handler reception means RXFH (RX_Frame Handler).

Moreover figure 4 illustrates a list FEL (Free_Entry_List) lodging the 'data relating to the available logical queue identifiers ENTRY and the TMO block of the time outs T_O defined by the protocol AAL.

A TXET block (TX_ENTRY_TABLE) is connected to the TXPH block, the first being preferentially implemented by means of an associative buffer, and it is addressed by the indicators TERM (of the terminal type) SSCS (service type) and CONN (connection type) arriving from the upper layers (SSCS), and it supplies the TXPH with the logical queue identifier ENTRY and the MID parameter (negotiated end-to-end during the call-setup phase), the data supplied by the TXFH unit refers to. To the TXPH block an RXET table (RX_ENTRY_TABLE) is analogically connected - also this being preferably implemented through an associative buffer - which is addressed by the indicators TERM (terminal type) SSCS (identifiers of the type of service) and by the MID parameter extracted from the SAR segments, and it supplies the logical queue identifier ENTRY and the connection identifier CONN which the segments arriving at the RXPH unit refer to.

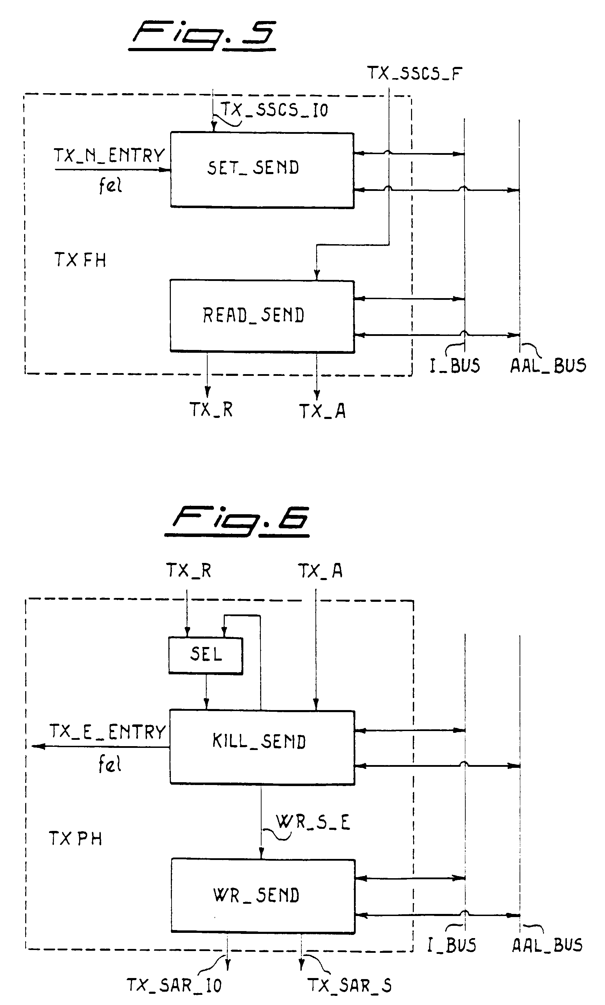

The detailed functioning of the above mentioned units will become clearer hereafter referring to the description of the figures 5 to 9.

Figure 5 illustrates in details the structure of the TXFH handler including two main blocks: SET_SEND and READ SEND.

The SET_SEND block accepts (or rejects) the primitives INVOKE (TX_SSCS_IO) arriving from the SSCS; if a call is accepted all relating tables are updated and a new ENTRY is extracted from the FEL by means of the connection TX_N_ENTRY (TX_NEW_ENTRY).

The READ_SEND block reads the data supplied by the SSCSs and stores them in the memory AAL*_BUFFER.

In other words the SET_SEND block receives from the hierarchical higher layers the transmission requests of an information frame (signal TX_SSCS_IO), carries out controls relating to the availability of free buffer space, and if the result of this verification is positive it accepts the request in question, and the data is transferred to the buffer AAL*_BUFFER by means of the unit MMU. The memory AAL*_BUFFER is a shared buffer organized in logical queues, each one of which being identified by the above mentioned ENTRY value (logical queues identifier).

In the so memorized data protocol operations must be carried out by the protocol handler TXPH illustrated in details in figure 6, such as for example the addition of control fields, the segmentation of data with variable length in units of fixed length, etc. Once these above mentioned protocol operations are carried out the unit TXPH provides for the forwarding of the manipulated data as specified at the lower layers. The TXPH unit TXPH includes for this purpose two main blocks: KILL_SEND and WR_SEND.

The KILL_SEND block receives from the READ_SEND unit in figure 5 a transmission request TX_R (TX_Request) after the storage operation described above. In other words after the TXFH unit has defined the data storage in the buffer AAL*_BUFFER it provides to inform the TXPH unit that there is a message available in the memory on which all protocol operations have to be carried out in view of the forwarding to the lower layers.

The transmission requests TX_Request are organized in a queue by means of a SEL unit (SEND_ENTRY_LIST), and the KILL_SEND block analyzes these requests in sequences, and if there is data identified by each ENTRY (logical queue identifier) in sufficient quantity to set up an ATM cell, it forwards to the WR_SEND block the ENTRYs WR_S_E (WR_Send_Entry) satisfying these conditions. The verification of the quantity of data available in the buffer with reference to each ENTRY is carried out by the bus I_BUS and AAL_BUS with the aid of the MMU unit.

If there is not enough data associated to a generic ENTRY to set up an ATM cell, the KILL_SEND unit provides for the reinsertion of such ENTRY into the Send_Entry_List SEL.

In other words the KILL_SEND block reads the Send_Entry_List in order to extract the ENTRY on which WR_SEND will be operating: it selects the first ENTRY of the list and verifies if there is enough data in the AAL*_BUFFER to set up a SAR segment.

In case there is enough data the ENTRY is handed as a parameter to the processor WR_SEND (Wr_Send_Entry), otherwise two conditions can occur: or the message has been completely transmitted, or there is data missing: in the first case the Entry will be freed for later use TX_E_ENTRY (TX_Exhausted_Entry) reinserting it into the FEL (Free_Entry_List), in the second case the ENTRY is recycled within the Send_Entry_List SEL.

The WR_SEND block realizes in transmission the protocol sublayers CPCS and SAR; moreover it can generate cells ABORT_EOM (for the translation of the primitive TX_ABORT arriving from an SSCS or after an excessive waiting period in the construction of the streaming mode message).

In other words the WR_SEND unit having received from the KILL_SEND unit the ENTRYs for which there is a sufficient quantity of data available in the buffer to set up a cell, it provides for adding all control fields, segmenting the data in a suitable length, and transferring the cell to the lower layer (TX_SAR_Segment) together with the sending of control signals TX_SAR_IO to settle the exchange of data between the WR_SEND unit and the unit below.

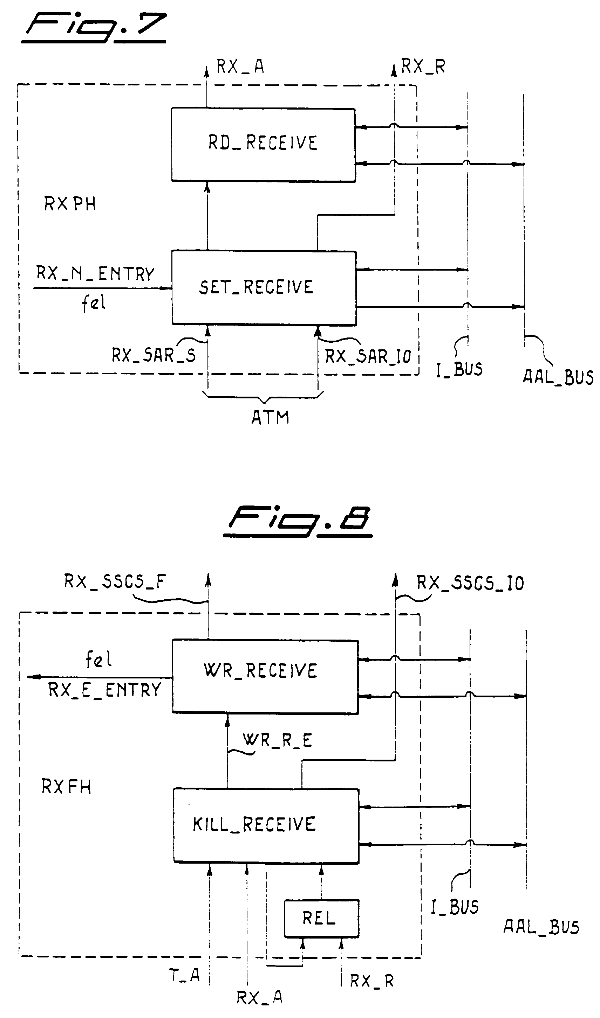

Figure 7 shows in a more detailed way the structure of the protocol handler RXPH including two main blocks: SET_RECEIVE and RD_RECEIVE.

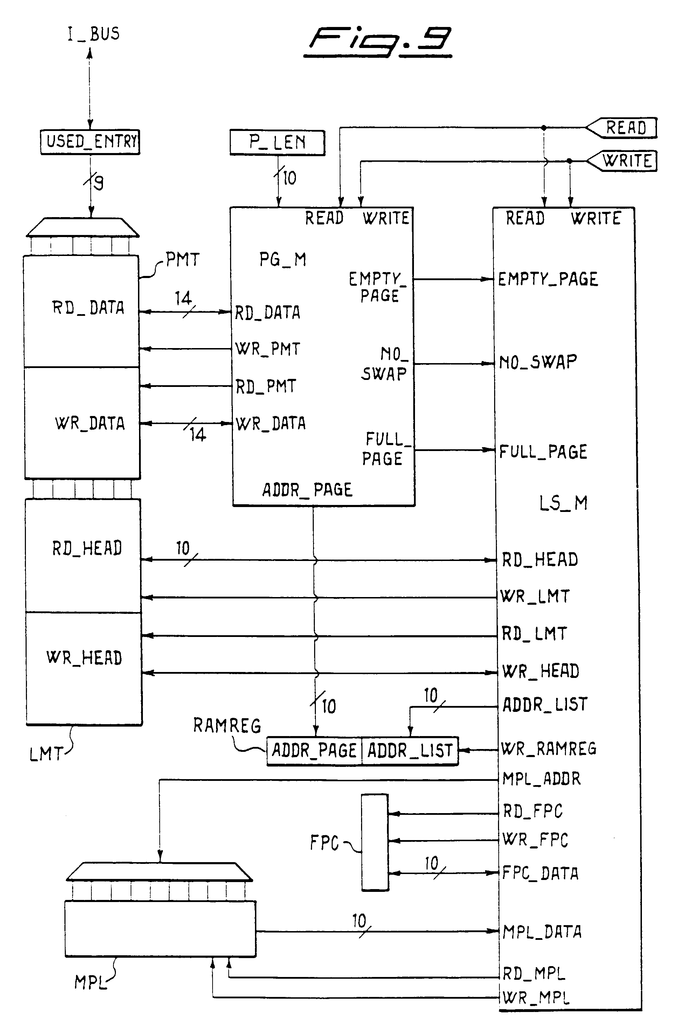

The SET_RECEIVE block receives the SAR segments through the connection RX_SAR_S (RX_SAR_Segment), extracts the control signals RX_SAR_IO and identifies the beginning of the message (BOM: Begin of Message) or the indication of an aborted message (ABORT_EOM). In the case of BOM segments it reads the BA_SIZE field (specifying the entire length of the message), verifies the existence of sufficient space in the AAL*_BUFFER and the existence of at least one available ENTRY; if the result of the control is positive it acquires the RX_New_Entry and sets up the internal list in a suitable way. In the case of ABORT_EOM segments it sends an ABORT message to the receiving SSCS by means of the KILL_RECEIVE processor of figure 8.

The RD_RECEIVE block realizes in reception the protocol sublayers SAR and CPCS reconstructing the message and memorizing it in the AAL*_BUFFER; moreover it takes care of the error handling.

In other words the RXPH block receives from the lower ATM layer the payload of the ATM cell through the RX_SAR_S input as well as the control signals through the RX_SAR_IO input in order to settle the information exchange. The above mentioned inputs arrive at a SET_RECEIVE unit providing for the assignment to the data received at the input of a free ENTRY, supplied by the above mentioned FEL unit (Free_Entry_List) on the basis of the parameters SSCS (service class identifier), TERM (User terminal identifier) and MID (Multiplexing_Identification). The ATM layer below defines in other words the data supplied to AAL* as belonging to a certain terminal or to a certain class of applications (e.g. file transfer).

The SET_RECEIVE unit associates to the above mentioned parameters SSCS, TERM and MID an ENTRY value at the moment of reception of the first cell and maintains this association for all the cells belonging to the same message. Said cells are transferred into the AAL*_BUFFER by means of the MMU unit and the above mentioned bus AAL_BUS and I_BUS.

When the SET_RECEIVE unit points out the accomplishment of the reception of all cells relating to a message it emits on the RX_R output (RX_Request) the ENTRY value identifying this message. To the SET_Receive unit an RD_RECEIVE unit is associated which provides for a verification if any error in the message reconstruction has been identified (e.g. the loss of a cell), and if this control points out whatever anomaly it provides for the emission of an abort message on the RX_A output (RX_ABORT).

Figure 8 illustrates in details the RXFH unit including a KILL_RECEIVE unit which - in a dual way what has been carried out by the KILL_SEND unit - provides for the analysis in sequence of the ENTRYs stored in a REL unit (Receive_Entry_List) and for the determination of their liberation (if all data relating to a message have been transmitted) or their recycling (if not all data relating to a message has been transmitted). Moreover the KILL_RECEIVE unit receives the RX_A message (RX_Abort) emitted by the RXPH unit of figure 7 and T_A (Timeout_Abort), these last ones being transmitted by the TMO unit of figure 5 if the elaboration of some procedures exceeds the preset times.

The KILL_RECEIVE unit emits at the WR_R_E output (WR_Receive_Entry) the identifier of the ENTRYs for which all data relating to a message has been received (and for which no abort problems sidewise and/or of Timeout_Abort have been revealed), and these ENTRYs reach a WR_RECEIVE unit providing for the forwarding of the message contained in the AAL*_BUFFER to the higher layers by means of the output (RX_SSCS_F) - identified by said ENTRYs - together with the input/ output signals RX_SSCS_IO.

In other words the KILL_RECEIVE block reads the REL (Receive_Entry_List) to obtain the Entry on which the WR_RECEIVE will operate: it selects the first ENTRY and sends an INVOKE (RX_SSCS_IO) towards the destination SSCS; if the SSCS accepts to receive the message the ENTRY becomes the WR_R_E (Wr_Receive_Entry), and it is handed over to the operational procedure WR_RECEIVE; if the SSCS is not available the ENTRY will be send back to the Receive_Entry_List.

Moreover this block sends the ERROR and ABORT messages towards the SSCS deriving from the translation of an RX_ABORT indication or from the deadline of a timeout. The WR_RECEIVE block reads the messages from the AAL*_BUFFER and transmits them to the destination SSCS.

Summarizing the above mentioned the subblocks having been rendered explicit in the different macroblocks can be put together in the following categories:
1) operational processes: RD_SEND, WR_SEND, RD_RECEIVE, WR_RECEIVE
2) set up processes: SET_SEND, SET_RECEIVE
3) Output control processes: KILL_SEND, KILL_RECEIVE
4) Timeout procedures: TMO

This classification has been carried out to decide the modality and the time of execution of each process. The processes of the operational type are activated at each cell time; this later is divided in four slots which are assigned to the processes when they want to have access to shared resources (e.g. AAL*_BUFFER) according to the following timing: two slots are assigned or to a RD_SEND or to a WR_RECEIVE (mutually exclusive), one slot to WR_SEND, one slot to RD_RECEIVE. As a consequence the ATM transfer speed being equal to 150 Mbit/s the maximum transfer speed of RD_SEND and WR_RECEIVE is 300 Mbit/s while the maximum transfer speed of WR_SEND and RD_RECEIVE is 150 Mbit/s.

The processes of the "setup" type are only activated when the manipulation of a message is requested, and they must occupy the lowest possible number of clock times.

The processes of the output control type handle the queues; they are activated once each all period and must occupy the lowest possible number of clock periods.

Figure 9 shows in a more detailed way the structure of the memory management MMU (Memory Management Unit); this management unit is suitable to define all pointer values, at the page and inside the page, which are necessary to write/read in/from the AAL*_BUFFER. The organization of the memory presents a functional/ technological problem which is important for the realization of a hardware protocol layer AAL.

First of all the dimension of the message queues identified by the Entrys depends essentially on the load offered to the AAL, that is to say on the type and on the number of applications insisting on the AAL itself.

It becomes therefore necessary to satisfy the following restraints, and that means:
- the buffer dimensions must be adjustable according to the subscriber's necessities;
- the maximum acceptable dimensions of the buffer must be sufficiently high so that they can also serve with a correct QoS (Quality of Service) very heavy subscriber use;
- the use of the buffer must be shared in order to optimize the occupation of the memory.

Moreover the fact that the frames have variable dimensions (between 1 and 64 Kbytes) imposes a memory management to prevent from fragmentation. The invention splits up the buffer into pages managed by means of a linked list of pointers; this method as regards the use of garbage collection mechanisms makes it possible to solve the memory fragmentation problem without being obliged to interrupt the normal flow of operations to start off reorganization cycles for the unoccupied space in the memory itself.

The number of pages composing the memory is fixed at 1024 pages: the maximum dimension of the RAM is equal to 4 Mbytes; the device can be equipped with multiple memory banks of 128 Kbytes depending on the applications.

A detailed description of the MMU is given hereafter beginning with an input/output signal analysis:
- INTERNAL_BUS: the processes having access to the AAL*_BUFFER through the MMU enter into this BUS the identifier of the logical queue (USED_ENTRY).
- PAGE_LEN: this register contains the dimension of an AAL*_BMFER page.
- RAMREG: in this register the physical address of the AAL*_BUFFER is included: this address is composed of a more significant part (ADDR_LIST) and of a less significant part (ADDR_PAGE). ADDR_LIST contains the value of the page having been actually addressed and been generated by the block LIST_MANAGER LS_M (about which we will talk hereafter), ADDR_PAGE contains the offset within the page and is generated by the PAGE_MANAGER PG_M block (we will talk about later).
- READ: a signal indicating to read a data double-word from the AAL*_BUFFER using the address contained in the RAMREG.
- WRITE: a signal indicating to write a data double-word into the AAL*_BUFFER using the address contained in the RAMREG. Moreover the MMU provides for the presence of the following lists and registers:
- MPL (MESSAGE_POINTER_LIST): this table contains a linked list of pointers for all ENTRY values used in a particular moment and a linked list including all unused pages (e.g. if there are 4 connections open in transmission and 3 in reception the maximum number of ENTRYs will be 7). The value contained in a memory location is the address of the following location belonging to the same queue.
- FPC (FREE_POINTER_COUNTER): this register stores the maximum number of empty pages actually available within the MESSAGE_POINTER_LIST (and so within the MESSAGE_RAM). It is decreased by the LIST_MANAGER when an empty page is needed and increased when a data page is read completely.
- LMT (LIST_MEMORY_TABLE): this table addressed by the USED ENTRY is subdivided in two fields:
   - WR_HEAD: this table contains for each admissible ENTRY the address inside the MESSAGE_POINTER_LIST of the head of the linked list identified by the ENTRY itself.
   - RD_HEAD: this table contains for each admissible ENTRY the address inside the MESSAGE_POINTER_LIST of the queue of the linked list identified by the ENTRY itself.
- PMT (PAGE_MEMORY_TABLE): this table addressed by the USED ENTRY is subdivided in two fields:
   - WR_DATA: this field stores for each active ENTRY the number of double-words which have been entered into the AAL*_BUFFER; this field is used by the PAGE_MANAGER for the calculation of the ADDR_PAGE.
   - RD_DATA: this field stores for each active ENTRY the number of double-words which have been read by the AAL*_BUFFER; this field is used by the PAGE_MANAGER for the calculation of the ADDR_PAGE.
   Moreover the MMU provides for the presence of the following functional blocks:
- PG_M (PAGE_MANAGER): it calculates the low part of the address (ADDR_PAGE) on the base of the values contained in the PAGE_MEMORY_TABLE: in case of reading the RD_DATA field is used, in case of writing the field WR_DATA filtered on the basis of the informations included in the PAGE_LEN. During the writing the value of the PAGE_MEMORY_TABLE.WR_DATA is increased; if a page is filled up during a writing operation the signal FULL_PAGE is generated.
During the reading the value of the PAGE_MEMORY_TABLE.RD_DATA is increased; if the current page gets empty during the reading operation the signal EMPTY_PAGE is generated.

The block interfaces with all other structures through the following signals:
- PAGE_LEN: a bus by which the page dimension is read.
- READ: writing of a double_word in the AAL*_BUFFER.
- WRITE: reading of a double_word by the AAL*_BUFFER.
- RD_DATA: a bus containing the new value of the PAGE_MEMORY_TABLE.RD_DATA calculated after a reading.
- WR_DATA: a bus containing the new value of the PAGE_MEMORY_TABLE.WR_DATA calculated after a writing.
- WR_PMT: data writing on the PAGE_MEMORY_TABLE.
- RD_PMT: data reading by the PAGE_MEMORY_TABLE.
- FULL_PAGE: signal indicating the LIST_MANAGER, that the current page is full, that it is necessary to add a page to the linked list stored in the MESSAGE_POINTER_LIST and identified by USED_ENTRY, and that it is necessary to modify the LIST_MEMORY_TABLE.WR_HEAD.
- NO_SWAP: signal indicating the LIST_MANAGER that the current page can be used for the following writing or reading.
- EMPTY_PAGE: signal indicating the LIST_MANAGER that the current page is empty, that it is necessary to eliminate a page from the linked list memorized in the MESSAGE_POINTER_LIST and identified by USED_ENTRY, and that it is necessary to modify the LIST_MEMORY_TABLE.RD_HEAD.
- ADDR_PAGE: bus containing the RAMREG.ADDR_PAGE, that is the value of the offset within the current page valid for the actual reading cycle (or writing cycle) of the AAL*_BUFFER.
- LS_M (LIST_MANAGER): calculates the upper part of the address (LIST_PAGE) on the base of the values contained in the LIST_MEMORY_TABLE: in the case of reading the field RD_HEAD is used, in the case of writing the field WR_HEAD is used.

When the signal FULL_PAGE is received during the writing phase one pointer at a page belonging to the list of empty pages is extracted and then linked to the list identified by the USED_ENTRY as a head (all linked lists are memorized in the MESSAGE_POINTER_LIST); the LIST_MEMORY_TABLE.WR_HEAD is updated by the value of this new pointer and the FREE_POINTER_COUNTER is decreased.

When the signal EMPTY_PAGE is received during the reading phase a pointer at a page belonging to the list identified by the USED_ENTRY is extracted and then linked to the list of the empty pages; the LIST_MEMORY_TABLE.RD_HEAD is updated and the FREE_POINTER_COUNTER is increased.

The block interfaces with the other structures through the following signals:
- READ: writing of a double_word in the AAL*_BUFFER
- WRITE: reading of a double_word by the AAL*_BUFFER
- FULL_PAGE: a signal indicating the LIST_MANAGER that the current page is full, that it is necessary to add a page to the linked list stored in the MESSAGE_POINTER_LIST and stored by the USED_ENTRY and that it is necessary to modify the LIST_MEMORY_TABLE.WR_HEAD.
- NO_SWAP: a signal indicating a LIST_MANAGER that the current page can be used for the following writing or reading.
- EMPTY_PAGE: a signal indicating the LIST_MANAGER that the current page is empty, that it is necessary to eliminate a page from the linked list memorized in the MESSAGE_POINTER_LIST and identified by the USED_ENTRY , and that it is necessary to modify the LIST_MEMORY_TABLE.RD_HEAD.
- RD_HEAD: bus containing the new LIST_MEMORY_TABLE.RD_HEAD calculated after a EMPTY_PAGE signal
- WR_HEAD: bus containing the new LIST_MEMORY_TABLE.WR_HEAD value calculated after a FULL_PAGE signal
- WR_LMT: data writing on the LIST_MEMORY_TABLE
- RD_LMT: data reading by the LIST_MEMORY_TABLE
- ADDR_LIST: bus containing the RAMREG.ADDR_LIST, that is the value of the page valid for the actual reading (or writing) cycle of the AAL*_BUFFER
- WR_RAMREG: data writing on the RAMREG
- MPL_ADDR: bus MESSAGE_POINTER_LIST addresses
- MPL_DATA: MESSAGE_POINTER_LIST data bus
- RD_MPL: data reading by the MESSAGE_POINTER_LIST
- WR_MPL: data writing on the MESSAGE_POINTER_LIST
- FPC_DATA: FREE_POINTER_COUNTER data bus
- RD_FPC: data reading by the FREE_POINTER_COUNTER
- WR_FPC: data writing on the FREE_POINTER_COUNTER

The preceding description relates to the AAL of type 3, for the AAL of type 4 the only difference is given by the fact that the field value MID is generated runtime, that is every time a new frame is received by the AAL* component.

## Claims

1. Device for converting frame structured data blocks belonging a plurality of users connected to a B-ISDN network of the ATM type into a flow of data arranged in segments of a given length and corresponding to the protocol layer AAL of the 3/4 class with said data segments being adapted to be converted into ATM cells and vice-versa, wherein said data blocks frame structured are coupled with a set of parameters set up by indicators (TERM, SSCS, CONN) identifying the type of terminals connected to the network, the type of service and the type of connection, and said segments are coupled with parameters identifying the type of terminal or service or Multiplexing (TERM, SSCS, MID);
said device being characterized in that it includes:
a first bidirectional connection bus (BUS1) toward the upper layer from where it receives or rather towards which it forwards, frame structured data;
- frame handler transmission means (TXFH) connected to said bus (BUS1) for receiving therefrom transmission requests of an informative frame with variable length, and for transferring the data relating to such frame into a buffer unit (AAL*_BUFFER) after organizing them in logical queues, each one of them being identified by a predetermined identifier (ENTRY);
- protocol handler transmission means (TXPH) connected to frame handler transmission means (TXFH) for receiving therefrom the identifier (ENTRY) of the logical queues for which in said buffer unit (AAL*_BUFFER) a predetermined minimum number of bytes is available, and for extracting data belonging to these logical queues and segmentating them into units with said given length and carrying out predetermined protocol operations;
- protocol handler reception means (RXPH) suitable for receiving from the lower layers ATM cell payloads and suitable also to define the transfer into said buffer unit after organizing them in logical queues each of which being identified by a predetermined identifier;
- frame handler reception means (RXFH) for receiving from said protocol handler reception means (RXPH) the identifier (ENTRY) of the logical queues for which all bytes relating to a message are available in said buffer unit, and suitable also to withdraw these logical queues and to define their forwarding to the upper layers (SSCS).

2. Device as claimed in claim 1, characterized in that said frame handlers means (TXPH and RXPH) and said protocol handlers means (TXPH and RXPH) are connected to said buffer (AAL*_BUFFER) via a second and third bus (I_BUS and AAL_BUS) and the management unit of said buffer.

3. Device as claimed in claims 1 and 2, characterized in that said logical queue identifiers (ENTRY) are stored in a first list (FEL) supplying said frame handler transmission means (TXFH) and said protocol handler reception means(RXPH) with the available identifiers (TX_N_ENTRY and RX_N_ENTRY) and receiving from said protocol handler transmission means (TXPH) and from said frame handler reception means (RXFH) the logical queue identifiers made available (TX_E_ENTRY and RX_E_ENTRY).

4. Device as claimed in claim 1, characterized in that to said protocol handler transmission means (TXPH) a second table (TXET) is associated which is suitable to receive in input said identifier of terminal, service and connection (TERM, SSCS, CONN) and to supply in output the logical queue identification (TX_N_ENTRY) the data in transmission refers to, and the value of the identification MID (Multiplexing_Identification) making it possible to multiplex several connections in a single ATM connection (or channel).

5. Device according to claim 1 , characterized in that to said protocol handler reception means (RXPH) a third table (RXET) is associated, suitable to receive in input said terminal and service identifiers (TERM, and SSCS), as well as a parameter (MID) arranged in the call-setup phase and to supply in output the logical queue identification (RX_N_ENTRY) the data in reception refers to.

6. Device according to claim 1, characterized in that to said frame handler reception means (RXFH) a fourth table (TMO) is associated where the timeouts relating to the different connections in accordance with the AAL protocol operations are located.

7. Device according to the claims from 1 to 6, characterized in that said frame handler transmission means (TXFH) includes a first block (SET_SEND) accepting or rejecting the transmission requests (TX_SSCS_IO) arriving from the upper layers (SSCS) and updating the relating tables when a call is accepted determining also the extraction of a new identifier (ENTRY) by said first list (FEL), and a second block (READ_SEND) reading the data supplied by the upper layers (TX_SSCS_F), and storing them in said buffer (AAL*_BUFFER) in the location identified by the identifier (ENTRY) obtained as specified above.

8. Device according to the claims from 1 to 6, characterized in that said protocol handler transmission means (TXPH) includes a first (KILL_SEND) block suitable to receive the identifiers (ENTRY) emitted by said frame handler transmission means (TXFH) via a fifth list (SEL) operating in FIFO discipline, as well as to verify if there is enough data identified by each identifier (ENTRY) to set up an ATM cell determining the reinsertion of the identifier (ENTRY) in said fifth list (SEL), if the result of the verification is negative, or rather the liberation of the identifier (TX_E_ENTRY), if the result of the verification is positive, and includes also a (WR_SEND) block suitable to realize the protocol sublayers CPCS and SAR of AAL 3/4 on the data coded by identifiers for which the result of the above mentioned verification was positive.

9. Device according to the claims from 1 to 6, characterized in that said protocol handler reception means (RXPH) includes a first (SET_RECEIVE) block suitable to receive in input the segments SAR (RX_SAR_S) and to verify the existence of an available identifier (ENTRY) determining the transfer of the segments SAR into said buffer (AAL*_BUFFER) in the buffer location identified by the identifier obtained as specified before, as well as to emit a reception request (RX_R) when in said buffer there is all data present relating to a message and including also a second (RD_RECEIVE) block suitable to emit an-abort message (RX_A) if an error is revealed in the reconstruction of the message.

10. Device according to the claims from 1 to 6, characterized in that said frame handler transmission means (TXFH) includes a first (KILL_RECEIVE) block suitable to receive the identifiers (ENTRY) emitted by said protocol handler reception means (RXPH) via a sixth list (REL) operating in FIFO discipline, as well as to verify if there is enough data identified by each one of the identifiers (ENTRY) to set up a frame, determining the reinsertion of the identifier (ENTRY) in said sixth list (REL) if the result of the verification is negative, or rather the liberation of the identifier (RX_E_ENTRY) if the result of the verification is positive, and including also a second block (WR_RECEIVE) suitable to forward to the upper layers (SSCS) the data coded by identifiers for which the result of the verification was positive.

11. Device according to claim 2, characterized in that said management unit (MMU) of the memory is shaped in such a way to determine the decomposition of said buffer (AAL*_BUFFER) in pages.

12. Device according to the claims from 2 to 11, characterized in that the memory management unit (MMU) is shaped in a way that it includes:
- a seventh list (MPL) containing a linked list of pages for all identifier values (ENTRY) used in an predetermined moment, and a linked list in which all unused pages are included;
- a first register (FPC) suitable to store the maximum number of empty pages in a predetermined instant within said seventh list (MPL);
- an eighth list (LMT) subdivided in two fields, the first of which (WR_HEAD) contains for each admissible identifier (ENTRY) the address inside said seventh list (MPL) of the head of the linked list identified by the identifier (ENTRY) itself, the second field (RD_HEAD) containing on the other hand for each admissible identifier (ENTRY) the address inside said seventh list (MPL) of the queue of the linked list identified by the identifier (ENTRY) itself;
- a ninth list (PMT), also this one subdivided in two fields, the first of them (WR_DATA) is suitable to store for each identifier (ENTRY) the number of double-words having been written into said buffer (AAL*_BUFFER), the second field (RD_DATA) on the other hand is containing for each active identifier (ENTRY) the number of double-words which have been read by said buffer (AAL*_BUFFER);
- a first elaboration unit (PG_M) suitable to calculate the lower part of the address (ADDR_PAGE) of said memory (AAL*_BUFFER) on the basis of the values contained in said ninth table (PMT);
- a second elaboration unit (LS_M) suitable to calculate the upper part of the address (LIST_PAGE) of said buffer (AAL*_BUFFER) on the basis of the values contained in said eighth table (LMT).

## Patentansprüche

1. Vorrichtung zur Umsetzung von zu einer Vielzahl von Teilnehmern gehörenden rahmenstrukturierten Datenblöcken verbunden mit einem B-ISDN-Netz vom ATM-Typ in einen Datenfluß, der in Segmenten mit vorgegebener Länge angeordnet ist und einer Protokollstufe AAL der 3/4 Klasse entspricht, wobei die genannten Datenblöcke geeignet sind, in ATM-Zellen umgewandelt zu werden und umgekehrt, wobei die rahmenstrukturierten Datenblöcke mit einem Satz von durch Indikatoren gebildete Parametern (TERM, SSCS, CONN) gekoppelt sind, die den Typ der mit dem Netz verbundenen Terminals, den Dienstleistungstyp und den Verbindungstyp identifizieren, und die genannten Segmente sind mit Parametern gekoppelt, die die Art des Terminal, der Dienstleistung oder des Multiplexings (TERM, SSCS, MID) identifizieren;
wobei die genannte Vorrichtung dadurch gekennzeichnet wird, daß sie folgendes einschließt:
- einen ersten zweiseitig gerichteten Verbindungsbus (BUS1) in Richtung der oberen Ebene, von wo er rahmenstrukturierte Daten empfängt, oder wohin er diese weiterleitet;
- Rahmenverwaltungsübertragungsmittel (TXFH) verbunden mit dem genannten Bus (BUS1), um von dort Übertragungsanfragen eines informativen Rahmens mit variabler Länge zu empfangen und um Daten bezüglich solcher Rahmen in eine Speichereinheit (AAL*_BUFFER) zu übertragen, nachdem diese in logischen Warteschlangen angeordnet wurden, wobei jede von ihnen durch eine vorabbestiamte Identifizierung (ENTRY) identifiziert worden ist;
- Protokollverwaltungsübertragungsmittel (TXPH) verbunden mit Rahmenverwaltungsübertragungsmitteln (TXFH), um von dort die Identifizierung (ENTRY) der logischen Warteschlangen zu empfangen, für die in der genannten Speichereinheit (AAL*_BUFFER) eine vorherbestimmte Anzahl von Bytes verfügbar ist, und um Daten zu entnehmen, die zu diesen logischen Warteschlangen gehören, und sie in Einheiten mit der genannten vorgegebenen Länge zu segmentieren und vorherbestimmte Protokollvorgänge auszuführen;
- Protokollverwaltungsempfangsmittel (RXPH), die geeignet sind, von den unteren Ebenen ATM-Zellpayloads zu empfangen, und ebenfalls geeignet, den Transfer in die genannte Speichereinheit zu definieren, nachdem sie in logische Warteschlangen, von denen jede einzelne durch eine vorbestimmte Identifizierung gekennzeichnet ist, eingeordnet worden sind;
- Rahmenverwaltungsempfangsmittel (RXFH), um von den genannten Protokollverwaltungsempfangseinheiten (RXPH) die Identifizierung (ENTRY) der logischen Warteschlangen zu empfangen, für die alle Bytes bezüglich einer Meldung im genannten Speicher verfügbar sind, und ebenfalls geeignet, diese logischen Warteschlangen zu entnehmen und ihre Übertragung zu den oberen Ebenen (SSCS) zu definieren.

2. Vorrichtung nach Anspruch 2, dadurch gekennzeichnet, daß die genannten Rahmemverwaltungsmittel (TXFH und RXFH) und die genannten Protokollverwaltungsmittel (TXPH und RXPH) mit dem genannten Speicher (AAL*_BUFFER) durch einen zweiten und dritten Bus (I_BUS und AAL_BUS) und die Verwaltungseinheit des genannten Speichers verbunden sind.

3. Vorrichtung nach den Ansprüchen 1 und 2, dadurch gekennzeichnet, daß die genannten Identifizierungen (ENTRY) der logischen Warteschlangen in einer ersten Tabelle (FEL) gespeichert sind, die die genannten Rahmenverwaltungsübertragungsmittel (TXFH) und die genannten Protokollverwaltungsempfangsmittel (RXPH) mit den verfügbaren Identifizierungen (TX_N_ENTRY und RX_N_ENTRY) stellt, und die von den genannten Protokollverwaltungsübertragungsmitteln (TXPH) und von den genannten Rahmenverwaltungsempfangsmitteln (RXFH) die verfügbar gemachten Identifizierungen der logischen Warteschlangen (TX_E_ENTRY und RX_E_ENTRY) empfängt.

4. Vorrichtung nach Anspruch 1, dadurch gekennzeichnet, daß mit den genannten Protokollverwaltungsübertragungsmitteln (TXPH) eine zweite Tabelle (TXET) verbunden wird, die geeignet ist, eingangs die genannte Identifizierung des Terminals, der Dienstleistung und der Verbindung (TERM, SSCS, CONN) zu empfangen, und ausgangs die Identifizierung der logischen Warteschlangen (TX_N_ENTRY) zu stellen, auf die sich die Übertragungsdaten beziehen, sowie den Wert der Identifizierung MID (Multiplexing_Identification), der es ermöglicht, verschiedene Verbindungen in einer einzigen ATM-Verbindung (oder Kanal) zu multiplexen.

5. Vorrichtung nach Anspruch 1, dadurch gekennzeichnet, daß mit den genannten Protokollverwaltungsempfangsmitteln (RXPH) eine dritte Tabelle (RXET) verbunden ist, die geeignet ist, eingangs die genannten Terminal- und Serviceidentifizierungen (Term und SSCS) zu empfangen, sowie auch ein Parameter (MID), das in die Rufstartphase eingeordnet ist, und ausgangs die Identifizierung der logischen Warteschlangen (RX_N_ENTRY) zu stellen, auf die sich die Empfangsdaten beziehen.

6. Vorrichtung nach Anspruch 1, dadurch gekennzeichnet, daß mit den genannten Rahmenverwaltungsempfangsmittel (RXFH) eine vierte Tabelle (TMO) verbunden ist, in der die Timeouts bezüglich der verschiedenen Verbindungen in Übereinstimmung mit den AAL-Protokollfunktionen untergebracht sind.

7. Vorrichtung entsprechend den Ansprüchen von 1 bis 6, dadurch gekennzeichnet, daß die genannten Rahmenverwaltungsübertragungsmittel (TXFH) einen ersten Block (SET_SEND) einschließen, der die Übertragungsanfragen (TX_SSCS_IO) akzeptiert oder abweist, welche von den höheren Ebenen (SSCS) ankommen, und die entsprechenden Tabellen auf den neuesten Stand bringt, wenn ein Ruf akzeptiert worden ist, und bestimmt auch die Entnahme einer neuen Identifizierung (ENTRY) durch die genannte erste Tabelle (FEL), und einen zweiten Block (READ_SEND), der die durch die oberen Ebenen (TX_SSCS_F) gestellten liest, und sie in dem genannten Speicher (AAL*_BUFFER) in den durch die Identifizierung identifizierten Stellungen speichert, welche man auf die oben erläuterte Weise erhält.

8. Vorrichtung entsprechend den Ansprüchen von 1 bis 6, dadurch gekennzeichnet, daß die genannten Protokollverwaltungsübertragungsmittel (TXPH) einen ersten (KILL_SEND) Block einschließen, der geeignet ist, die Identifizierungen (ENTRY) zu empfangen, die von den genannten Rahmenverwaltungsübertragungsmitteln (TXFH) über eine fünfte, in FIFO-Disziplin arbeitende Tabelle (SEL) emittiert werden, und der geeignet ist, festzustellen, ob es genügend durch jede Identifizierung (ENTRY) festgestellte Daten gibt, um eine ATM-Zelle zu bilden bei Festlegung der Wiedereinführung der Identifikation (ENTRY) in die genannte fünfte Tabelle (SEL), wenn das Ergebnis der Überprüfung negativ ist, oder bei Freisetzung der Identifizierung (TX_E_ENTRY), wenn das Ergebnis der Überprüfung positiv ist, und sie schließen auch einen (WR_SEND) Block, der geeignet ist die Protokollunterebenen CPCS und SAR von AAL 3/4 auf den durch die Identifikation kodierten Daten zu verwirklichen, und zwar für die Identifizierungen, für die die Überprüfung positiv ausgegangen ist.

9. Vorrichtung entsprechend den Ansprüchen von 1 bis 6, dadurch gekennzeichnet, daß die genannten Protokollverwaltungsempfangsmittel (RXPH) einen ersten (SET_RECEIVE Block einschließen, der geeignet ist, eingangs die Segmente SAR (RX_SAR_S) zu empfangen, und das Vorhandensein einer verfügbaren Identifizierung (ENTRY) zu überprüfen, bei Bestimmung der Übertragung von Segmenten SAR in den genannten Speicher (AAL*_BUFFER) in der durch die Identifizierung, welche man wie vorstehend erläutert erhält, festgestellte Speicherposition, und der genannte Block (SET_RECEIVE) Block ist weiter geeignet, eine Empfangsanfrage abzugeben, wenn in dem genannten Speicher alle Daten vorhanden sind, die sich auf eine Meldung beziehen, und er schließt auch einen zweiten (RD_RECEIVE) Block ein, der geeignet ist, eine Abbruchmeldung (RX_A) zu senden, wenn ein Fehler in der Rekonstruktion der Meldung festgestellt wird.

10. Vorrichtung entsprechend den Ansprüchen von 1 bis 6, dadurch gekennzeichnet, daß die genannten Rahmenverwalterübertragungsmittel (TXFH) einen ersten (KILL_RECEIVE) Block einschließen, der geeignet ist, die durch die genannten Protokollverwalterempfangsmittel (RXPH) über eine sechste, in FIFO-Disziplin arbeitende Tabelle (REL) abgegebenen Identifikationen (ENTRY) zu empfangen, und ist weiter geeignet, zu überprüfen, ob es genügend durch jede einzelne der Identifikationen (ENTRY) gekennzeichnete Daten gibt, um einen Rahmen zu bilden, bei Bestimmung der Wiedereinfügung der Identifizierung (ENTRY) in die genannte sechste Tabelle (REL), wenn das Ergebnis der Überprüfung negativ ist, oder aber bei Freisetzung der Identifizierung (RX_E_ENTRY), wenn das Ergebnis der Überprüfung positiv ist, und sie schließen auch einen zweiten Block (WR_RECEIVE) ein, der geeignet ist, die durch Identifizierungen mit positivem Überprüfungsergebnis kodierte Daten an die höheren Ebenen (SSCS) weiterzugeben.

11. Vorrichtung nach Anspruch 2, dadurch gekennzeichnet, daß die genannte Verwaltungseinheit (MMU) des Speichers derart gestaltet ist, daß das Zerlegen des genannten Speichers (AAL*_BUFFER) in Seiten bestimmt werden kann.

12. Vorrichtung entsprechend den Ansprüchen von 2 bis 11, dadurch gekennzeichnet, daß die Speicherverwaltungseinheit (MMU) derart gestaltet ist, daß sie folgendes einschließt:
- eine siebte Tabelle (MPL) die eine gekoppelte Seitentabelle für alle Wertidentifizierungen (ENTRY) enthält, die in einem vorherbestimmten Augenblick gebraucht werden, und eine gekoppelte Tabelle, die alle unbenutzten Seiten enthält;
- ein erstes Register (FPC), das geeignet ist, eine Höchstanzahl von leeren Seiten in einem vorabbestimmten Augenblick innerhalb der genannten siebten Tabelle (MPL) zu speichern;
- eine achte Tabelle (LMT), die in zwei Felder unterteilt ist, von denen das erste (WR_HEAD) für jede annehmbare Identifizierung (ENTRY) die Adresse innerhalb der genannten siebten Tabelle (MPL) des Kopfes der gekoppelten, durch die Identifizierung (ENTRY) selbst identifizierte Tabelle enthält, und das zweite Feld (RD_HEAD) enthält andererseits für jede annehmbare Identifizierung (ENTRY) die Adresse innerhalb der genannten siebten Tabelle (MPL) der Warteliste der gekoppelten Tabelle, die durch die Identifizierung (ENTRY) selbst identifiziert worden ist;
- eine neunte Tabelle (PMT), auch diese in zwei Felder unterteilt, von denen das erste (WR_DATA) geeignet ist, für jede Identifizierung (ENTRY) die Anzahl von Double-Words zu speichern, die im genannten Speicher (AAL*_BUFFER) geschrieben worden sind, und von denen das zweite Feld (RD_DATA) für jede aktive Identifizierung (ENTRY) die Anzahl der Double-Words enthält, die durch den genannten Speicher (AAL*_BUFFER) gelesen worden sind;
- eine erste Bearbeitungseinheit (PG_M), die geeignet ist, den unteren Teil der Adresse (ADDR_PAGE) des genannten Speichers (AAL*_BUFFER) auf der Basis der in der genannten neunten Tabelle (PMT) enthaltenen Werte zu berechnen;
- eine zweite Bearbeitungseinheit (LS_M), die geeignet ist, den oberen Teil der Adresse (LIST_PAGE) des genannten Speichers (AAL*_BUFFER) auf der Basis der in der genannten achten Tabelle (LMT) enthaltenen Werte zu berechnen.

## Revendications

1. Dispositif pour la conversion de blocs de données structuré en trame appartenant à une pluralité d'abonnés relié à un réseau B-ISDN du type ATM en un courant de données organisé en segments d'une longueur donnée et correspondant au niveau de protocole AAL de la classe 3/4 avec les dits segments étant adaptés à être convertis en cellules ATM et vice-versa, où les dits blocs de données structurés en trame sont accouplés avec un ensemble de paramètres formés par des indicateurs (TERM, SSCS, CONN) identifiant le type de terminaux reliés au réseau , le type de service et le type de connexion, et les dits segments sont associés avec des paramètres, qui identifient le type de terminal ou service ou multiplexage (TERM, SSCS, MID);
le dit dispositif étant caractérisé en ce qu'il comprend:
un premier bus de connexion bi-directionnel (BUS1) vers le niveau supérieur d'où il reçoit ou plutôt vers laquelle il envoie des données structurées en trame;
des moyens de gestion de trames en transmission (TXPH) reliés au dît bus (BUS1) pour en recevoir des demande de transmission d'une trame de données avec longueur variable et pour transférer les données relatives à telle trame dans une unité de mémoire (AAL*_BUFFER), après les avoir organisées en queues logiques, chacune d'elles étant identifiée par un identificateur prédéterminé (ENTRY);
des moyen de gestion de protocole en transmission (TXPH) relié à des moyens de gestion de trames en transmission (TXFH) pour en recevoir l'identificateur (ENTRY) des queues logiques, pour lesquelles un nombre minimum prédéterminé d'octets est disponible dans la dite unité de mémoire (AAL*_BUFFER), et pour extraire des données appartenantes à ces queues logiques et les segmenter en unités avec la dite longueur donnée et effectuer des opérations de protocole prédéterminées;
des moyens de gestion de protocole en réception (RXPH) aptes à recevoir des niveaux inférieurs des payloads de cellules ATM, et aussi apte à définir le transfert dans la dite unité mémoire après les avoir organisés en queues logiques, chacune des quelles étant identifiée par un identificateur prédéterminé;
des moyens de gestion de trames en réception (RXFH) pour recevoir des dits moyens de gestion de trames en réception (RXPH) l'identificateur (ENTRY) des queues logiques pour lesquelles tous les octets relatifs à un message sont disponibles dans la dite unité de mémoire, et aussi apte à retirer ces queues logiques et à définir leur envoi aux niveaux supérieurs SSCS).

2. Dispositif selon la revendication 1, caractérisé en ce que les dits moyens de gestion de trames (TXFH et RXFH) et les dits moyens de gestion de protocole (TXPH et RXPH) sont reliés à la dite mémoire (AAL*_BUFFER) par un deuxième et troisième bus (I_BUS et AAL_BUSS) et l'unité de gestion de la dite mémoire.

3. Dispositif selon les revendications 1 et 2, caractérisé en ce que les dits identificateurs de queues logiques (ENTRY) sont mémorisés dans une première liste (FEL), qui fournissent les dits moyens de gestion de trames en transmission (TXPH) et les dits moyens de gestion de protocole en réception (RXPH) avec les identificateurs disponibles (TX_N_ENTRY et RX_N_ENTRY), et qui reçoivent des dits moyens de gestion de protocole en transmission (TXPH) et des dits moyens de gestion de trames en réception (RXPH) les identificateurs de queues logiques rendus disponibles (TX_E_ENTRY et RX_E_ENTRY).

4. Dispositif selon la revendication 1, caractérisé en ce qu'aux dits moyens de gestion de protocole en transmission (TXPH) une deuxième liste (TXET) est associée, qui est apte à recevoir en entrée le dît identificateur de terminal, de service et de connexion (TERM, SSCS, CONN), et de fournir en sortie l'identification des queues logiques (TX_N_ENTRY), à laquelle se référent les données en transmission, et la valeur de l'identification MID (Multiplexing_Identification) permettant de multiplexer plusieurs connexions dans une seule connexion (ou canal) ATM.

5. Dispositif selon la revendication 1, caractérisé en ce qu'aux dits moyens de gestion de protocole en réception (RXPH) une troisième liste (RXET) est associée, apte à recevoir en entrée les dits identificateurs de terminal et de service (TERM et SSCS) et aussi un paramètre (MID) organisé pendant la phase de call set-up, et à fournir en sortie l'identification de queues logiques (RX_N_ENTRY) à laquelle référent les données en réception.

6. Dispositif selon la revendication 1, caractérisé en ce qu'aux dits moyens de gestion de trames en réception (RXFH) une quatrième liste (TMO) est associée, où les timeouts relatifs aux différentes connexions en accord avec les opérations de protocole AAL sont placées.

7. Dispositif selon les revendications de 1 à 6, caractérisé en ce que les dits moyens de gestion de trames en transmission (TXFH) comprennent un premier bloc (SET_SEND) acceptant ou rejetant les demande de transmission (TX_SSCS_IO), qui arrivent des niveaux supérieurs (SSCS) et qui mettent à jour les listes relatives, quand un appel est accepté déterminant aussi l'extraction d'un nouveau identificateur (ENTRY) par la dite première liste (FEL), et un deuxième bloc (READ_SEND) lisant les données fournies par les niveaux supérieurs (TX_SSCS_F), et qui les mémorisent dans la dite mémoire (AAL*_BUFFER) dans les positions identifiées par l'identificateur (ENTRY) obtenu comme expliqué ci-dessus.

8. Dispositif selon les revendications de 1 à 6, caractérisé en ce que les dits moyens de gestion de protocole en transmission (TXPH) comprennent un premier bloc (KILL_SEND) apte à recevoir les identificateurs (ENTRY) émis par les dits moyens de gestion de trames en transmission (TXFH) par une cinquième liste (SEL) fonctionnant avec la discipline FIFO, et à vérifier, si le résultat du contrôle est négatif, ou plutôt la libération de l'identificateur (TX_E_ENTRY), si le résultat du contrôle est positif, et qu'il comprend aussi un bloc (WR_SEND) apte à réaliser les sous-niveaux de protocole CPCS et SAR de AAL 3/4 sur les données codifiées par des identificateurs pour lesquels le résultat des contrôles mentionnés ci-dessus est positif.

9. Dispositif selon les revendications de 1 à 6, caractérisé en ce que les dits moyens de gestion de protocole en réception (RXPH) comprennent un premier bloc (SET_RECEIVE) apte à recevoir en entrée les segments SAR (RX_SAR_S) et à vérifier l'existence d'un identificateur disponible (ENTRY) déterminant le transfert des segments SAR dans la dite mémoire (AAL*_BUFFER) dans la position de mémoire identifiée par l'identificateur obtenu comme expliqué ci-dessus, et aussi à émettre une demande de réception (RX_R), quand il y a dans la dite mémoire toutes les données présentes relatives à un message, et comprenant aussi un deuxième bloc (RD_RECEIVE) apte à émettre un message d'abandon (RX_A), si une erreur est relevée dans la reconstruction du message.

10. Dispositif selon les revendications de 1 à 6, caractérisé en ce que les dits moyens de gestion de trames en transmission (TXFH) comprennent un premier bloc (KILL_RECEIVE) apte à recevoir les indentificateurs (ENTRY) émis par les dits moyens de gestion de protocole en réception (RXPH) par une sixième liste (REL) fonctionnant avec discipline FIFO, et apte à contrôler , s'il y a assez de données identifiées par chacun des identificateurs (ENTRY) pour former une trame, déterminant la réinsertion de l'identificateur (ENTRY) dans la sixième liste (REL), si le résultat du contrôle est négatif, ou plutôt la libération de l'identificateur (RX_E_ENTRY), si le résultat du contrôle est positif, et comprenant aussi un deuxième bloc (WR_RECEIVE) apte à envoyer aux niveaux supérieurs (SSCS) les données codifiées par des identificateurs, pour lesquels le résultat du contrôle a été positif.

11. Dispositif selon la revendication 2, caractérisé en ce que la dite unité de gestion (MMU) de la mémoire est formée de telle manière pour déterminer la décomposition de la dite mémoire (AAL*_BUFFER) en pages.

12. Dispositif selon les revendications de 2 à 11, caractérisé en ce que l'unité de gestion de la mémoire (MMU) est formée d'une manière, qu'elle comprend:
- une septième liste (MPL), qui contient une liste connectée de pages pour toutes les valeurs d'identificateurs (ENTRY) utilisées en un moment prédéterminé, et une liste connectée, qui comprend toutes les pages inutilisées;
- un premier registre (FPC) apte à mémoriser un nombre maximum de pages vides dans un instant prédéterminé à l'intérieur de la dite septième liste (MPL);
- une huitième liste (LMT) subdivisée en deux champs, le premier des quels (WR_HEAD) contient pour chaque identificateur admissible (ENTRY) l'adresse à l'intérieur de la dite septième liste (MPL) de la tête de la liste connectée identifiée par l'identificateur (ENTRY) même, le deuxième champ (RD_HEAD) contenant d'autre part pour chaque identificateur admissible (ENTRY) l'adresse à l'intérieur de la dite septième liste (MPL) de la queue de la liste associée identifiée par l'identificateur (ENTRY) même;
- une neuvième liste (PMT), aussi celle-ci subdivisée en deux champs, le premier desquels (WR_DATA) est apte à mémoriser pour chaque identificateur (ENTRY) le nombre de double-words étant écrits dans la dite mémoire (AAL*_BUFFER), le deuxième champ (RD_DATA) d'autre part contient pour chaque identificateur actif (ENTRY) le nombre de double-words, qui ont été lus par la dite mémoire (AAL*_BUFFER);
- une première unité d'élaboration (PG_M) apte à calculer la part inférieur de l'adresse (ADDR_PAGE) de la dite mémoire (AAL*_BUFFER) sur la base des valeurs comprises dans la dite neuvième liste (PMT);
- une deuxième liste d'élaboration (LS_M) apte à calculer la part supérieure de l'adresse (LIST_PAGE) de la dite mémoire (AAL*_BUFFER) sur la base des valeurs contenues dans la dite huitième liste (LMT).
